(19) Europäisches Patentamt
European Patent Office
Office européen des brevets

(11) **EP 3 046 068 B1**

## (12) EUROPEAN PATENT SPECIFICATION

(45) Date of publication and mention
of the grant of the patent:
**02.09.2020 Bulletin 2020/36**

(51) Int Cl.:
***G06T 3/40*** (2006.01)

(21) Application number: **15200042.8**

(22) Date of filing: **15.12.2015**

## (54) METHOD AND DEVICE FOR ADJUSTING PAGE DISPLAY

VERFAHREN UND VORRICHTUNG ANPASSUNG EINER SEITENANZEIGE

PROCÉDÉ ET DISPOSITIF POUR RÉGLER L'AFFICHAGE DE PAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2015 CN 201510020768**

(43) Date of publication of application:
**20.07.2016 Bulletin 2016/29**

(73) Proprietor: **Xiaomi Inc.
Beijing 100085 (CN)**

(72) Inventors:
• **YU, Mingyang**
**100085 Haidian District (CN)**
• **LI, Weixing**
**100085 Haidian District (CN)**
• **WAN, Yuzhen**
**100085 Haidian District (CN)**

(74) Representative: **Sadler, Peter Frederick
Reddie & Grose LLP
The White Chapel Building
10 Whitechapel High Street
London E1 8QS (GB)**

(56) References cited:
• **Anonymous: "Supporting multiple screens",
Android Developers , 28 December 2014
(2014-12-28), pages 1-16, XP002757697,
Retrieved from the Internet:
URL:https://web.archive.org/web/2014122817
2659/http://developer.android.com/guide/pr
actices/screens_support.html [retrieved on
2016-05-10]**
• **Aaron Sher: "Automatically Scaling Android
Apps For Multiple Screens", , 18 April 2012
(2012-04-18), pages 1-15, XP055272561,
Retrieved from the Internet:
URL:http://www.vanteon.com/downloads/Scali
ng_Android_Apps_White_Paper.pdf [retrieved
on 2016-05-13]**

## Description

## TECHNICAL FIELD

The present disclosure generally relates to the field of internet technology, and more particularly, to a method and a device for adjusting page display.

## BACKGROUND

In a native Android system, various logic densities are defined for various terminals according to resolutions of their display screens. These logic densities, or generalized densities, are predetermined densities corresponding to particular density ranges. For example a set of generalized densities may include: ldpi (low) -120dpi; mdpi (medium) -160dpi; hdpi (high) -240dpi; xhdpi (extra-high) -320dpi; xxhdpi (extra-extra high) -480dpi; xxxhdpi (extra-extra-extra high) - 640dpi; and so on. Each generalized density corresponds to a range of actual screen densities and so these densities are sometimes referred to as density "buckets". For example, two devices that report a screen density of xhdpi might have slightly different real pixel densities. In the Android system these differences are abstract to applications, so that UIs can be designed for the generalized or logic densities, and the Android system then handles any final adjustments as necessary. Since the native Android system just selects a logic density corresponding to one of the density buckets according to a resolution, the same logic density may be selected for mobile phones having different physical screen sizes. For example, for mobile phones of 5 inches and 5.5 inches, the logic density may be the same xxhdpi (480dpi). When an application program having a xxhdpi resource is respectively installed in the two mobile phones, in visual effects, the xxhdpi picture resource on the mobile phone of 5.5 inches will be 1.1 times as large as that on the mobile phone of 5.5 inches (5.5 / 5 = 1.1). However, most users purchasing a mobile phone with a large screen are expecting for more displayed content (for example, more app icons displayed on one page), rather than just an enlarged version of a small screen. Under the current density mechanism of the Android system, layouts of third party application programs cannot be adjusted.

In the related art, mobile phone manufacturers utilize different picture adjusting methods for mobile phones having different screen sizes. A picture may be stretched horizontally or longitudinally as desired while maintaining the pixel precision, to satisfy the demand for accommodating various resolutions for the Android platform. However, such picture adjusting methods can only adjust page layouts for pre-installed application programs such as system application programs, and cannot adjust for third party application programs installed by the users, and cannot adjust layouts for particular devices.

"Supporting multiple screens", Android Developers, 28 December 2014, https://web.archive.org/web/20141216232021/http://developer-android.com/guide/practices/s creens_support.html, XP002757697, provides an overview of Android's support for multiple screens and screen-compatibility features.

## SUMMARY

In order to overcome the problem in the related art, the embodiments of the present disclosure provide a method and a device for adjusting page or screen display, which is to achieve the objective of adjusting the page display of a terminal device according to a user demand.

According to a first aspect of embodiments of the present disclosure, there is provided a method for adjusting page display, including:

according to a user demand on page display, acquiring a first logic density corresponding to the user demand on page display, the first logic density being defined in an operating system by a developer, for example the first logic density may be a dpi corresponding to a dpi representative of a predetermined range of densities;

acquiring a second logic density of an application program to be displayed, the second logic density being defined by a developer of the application program to be displayed, for example the second logic density may be a specifically selected dpi different from those permitted according to the first set of logic densities;

determining a scaling factor of elements in a page of the application program according to the first logic density and the second logic density; and

scaling the elements in the page of the application program for display according to the scaling factor.

According to a user demand on page display, acquiring a first logic density corresponding to the user demand on page display, includes:

according to a model of a current terminal or a size of a display screen, selecting a first logic density corresponding to the model of the current terminal or the size of the display screen.

In an embodiment, determining a scaling factor of elements in a page of the application program according to the first logic density and the second logic density may include:

calculating the scaling factor m of the elements in the page of the application program based on the following formula

$$m = \frac{X}{Z}$$

wherein, m denotes the scaling factor of the elements in the page of the application program; X denotes the first logic density; and Z denotes the second logic density.

According to a second aspect of embodiments of the present disclosure, there is provided a device for adjusting page display, including:

a first acquiring module configured to, according to a user demand on page display, acquire a first logic density corresponding to the user demand on page display, the first logic density being defined in an operating system by a developer;

a second acquiring module configured to acquire a second logic density of an application program to be displayed, the second logic density being defined by a developer of the application program to be displayed;

a determining module configured to determine a scaling factor of elements in a page of the application program according to the first logic density and the second logic density; and

a scaling module configured to scale the elements in the page of the application program for display according to the scaling factor.

The first acquiring module includes:
a selecting sub-module configured to, according to a model of a current terminal or a size of a display screen, select a first logic density corresponding to the model of the current terminal or the size of the display screen.

In an embodiment, the determining module may include:
a calculating sub-module configured to calculate the scaling factor m of the elements in the page of the application program based on the following formula

$$m = \frac{X}{Z}$$

wherein, m denotes the scaling factor of the elements in the page of the application program; X denotes the first logic density; and Z denotes the second logic density.

In an embodiment, the first acquiring module may include:
a first selecting sub-module configured to, according to a setting about a size of a page layout from a user, select a first logic density corresponding to the size of the page layout set by the user.

According to a third aspect of embodiments of the present disclosure, there is provided a device for adjusting page display, including:

a processor; and
a memory for storing instructions executable by the processor;
wherein the processor is configured to perform the method according to the first aspect.

According to a fourth aspect of embodiments of the present disclosure, there is provided a computer program, which when being executed on a processor, performs the method according to the above first aspect.

According to a fifth aspect of embodiments of the present disclosure, there is provided a computer program product stored on a computer usable medium, comprising computer-readable program means for causing a server to implement the method according to the above first aspect. When implemented in a server, the scaling factor may be determined, and sent to the electronic device in order to cause scaling of the elements in the page of the application program for display according to the scaling factor. Appropriate instructions may be sent with the scaling factor to cause the electronic device to perform the scaling.

The advantageous effects brought by the technical solutions according to the embodiments of the present disclosure may include:

In the technical solutions provided by the embodiments of the present disclosure, a first logic density corresponding to the user demand on page display, and a second logic density of an application program to be displayed are acquired, and a scaling factor of elements in a page of the application program is determined according to the first logic density and the second logic density, so as to scale the elements in the page of the application program for display according to the scaling factor. Thereby, the page display can be adjusted according to the user demand, and the user demand on different manners of page display can be satisfied.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a flow chart of a method for adjusting page display according to an exemplary embodiment.
Fig. 2 is a flow chart of another method for adjusting page display according to an exemplary embodiment.
Fig. 3 is a flow chart of still another method for adjusting page display according to an exemplary embodiment.

Fig. 4 is a flow chart of further still another method for adjusting page display according to another exemplary embodiment.

Fig. 5 is a block diagram of a device for adjusting page display according to an exemplary embodiment.

Fig. 6 is a block diagram of another device for adjusting page display according to an exemplary embodiment.

Fig. 7 is a block diagram of still another device for adjusting page display according to an exemplary embodiment.

Fig. 8 is a block diagram of further still another device for adjusting page display according to an exemplary embodiment.

Fig. 9 is a block diagram of further still another device for adjusting page display according to an exemplary embodiment.

Fig. 10 is a block diagram of a device applied for adjusting page display according to an exemplary embodiment.

**DETAILED DESCRIPTION**

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

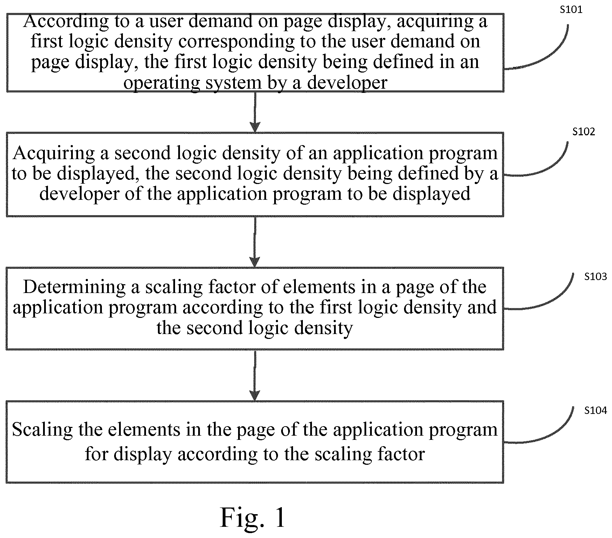

Fig. 1 is a flow chart of a method for adjusting page display according to an exemplary embodiment. As shown in Fig. 1, the method can be applied in a system program or other application programs of a device. The method for adjusting page display includes the following steps S101-S104.

In step S101, according to a user demand on page display, a first logic density corresponding to the user demand on page display is acquired, the first logic density being defined in an operating system by a developer.

In the present embodiment, the first logic density is a logic density defined in the operating system by a highly customized developer of the Android system, instead of a logic density defined in a native Android system.

In an Android mobile phone, for example, in the native Android operating system, logic densities for display of devices are defined in default. For example, the native Android operating system defines several values of screen logic densities, such as 160dpi (mdpi), 240dpi (hdpi), 320dpi (xhdpi), 480dpi (xxhdpi) and 640dpi (xxxhdpi).

For example, in a mobile terminal having a display screen with a resolution of 640, the native Android operating system uses a logic density of xxxhdpi in default, to control the display of the device, without taking the physical size of the screen into account.

In an embodiment of the present disclosure, to improve the above method, the logic densities are redefined by a highly customized developer of the Android system. Thus, the logic density is not selected in accordance with the resolution of the mobile phone. Rather, various logic densities are self-defined according to user demands about page display.

Specifically, a user demand on page display at least includes the following two situations.

(1) Setting about a size of a page layout from a user

In this case, some users (such as the aged) prefer elements displayed in a page as large as possible, some users prefer small elements displayed in a page with as much content displayed on a screen as possible. In this regard, setting options can be set in the operating system, to provide different sizes of page layouts for the users to select.

For example, options for page layouts can be added in a boot or in a "settings" menu. The options for page layouts can have several options such as "small", "default", "medium", "large", "super large" and so on. When he wants to adjust a page layout, a user may click one of the options. Since each of the options corresponds to a scaling factor, the page layout can be adjusted according to the scaling factor corresponding to the option.

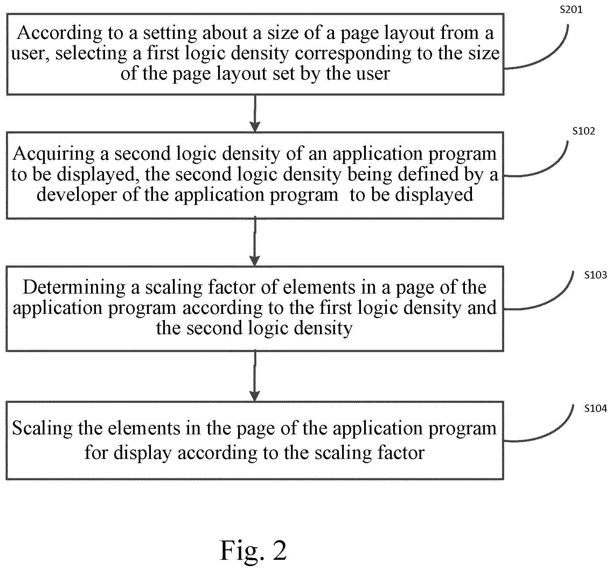

Based on this method, as shown in Fig. 2, the step S101 can be performed as the following step S201:

In step S201, according to a setting about a size of a page layout from a user, a first logic density corresponding to the size of the page layout set by the user is selected.

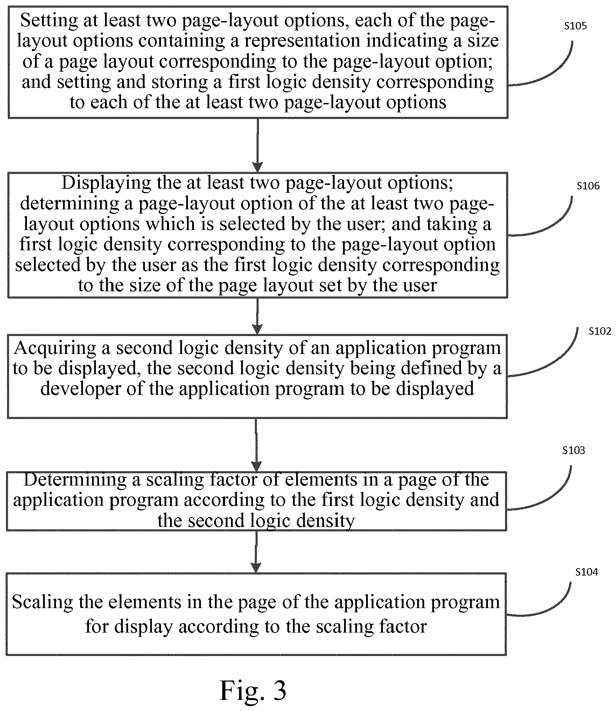

Also based on the above method, in an embodiment, as shown in Fig. 3, the above method may also include steps S105-S106.

In step S105, at least two page-layout options are set, each of the page-layout options containing a representation indicating a size of a page layout corresponding to the page-layout option; and a first logic density corresponding to each of the at least two page-layout options is set and stored.

Then, step S201 can be performed as the following step S106.

In step S106, the at least two page-layout options are displayed; a page-layout option of the at least two page-layout options which is selected by the user is determined; and a first logic density corresponding to the page-layout option selected by the user is taken as the first logic density corresponding to the size of the page layout set by the user.

(2) Based on a user demand on a physical size of page elements displayed on a screen.

With the same resolution, the physical sizes of the screens may be different.

For example,

for a screen of a mobile phone with a model X1, the resolution is 480dpi, the physical size is 5 inches; and

for a screen of a mobile phone with a model X2, the resolution is 480 dpi, the physical size is 5.5 inches.

Under the definition of the native Android system, the same logic density will be selected for both X1 and X2. Then, on the page on X2 with the 5.5-inch screen, the page will be enlarged. However, in practical application, the user wants the physical size of the elements displayed on the screens of different sizes to be the same, for effective utilization of the screen of the device with a large screen, and also to improve the visual experience of the user.

Accordingly, in the embodiments of the present disclosure, by improving the logic density mechanism in the native system, different logic densities can be set for mobile phones of different models (or of different sizes), such that the physical sizes of elements can be the same when pages are displayed on screens of different sizes.

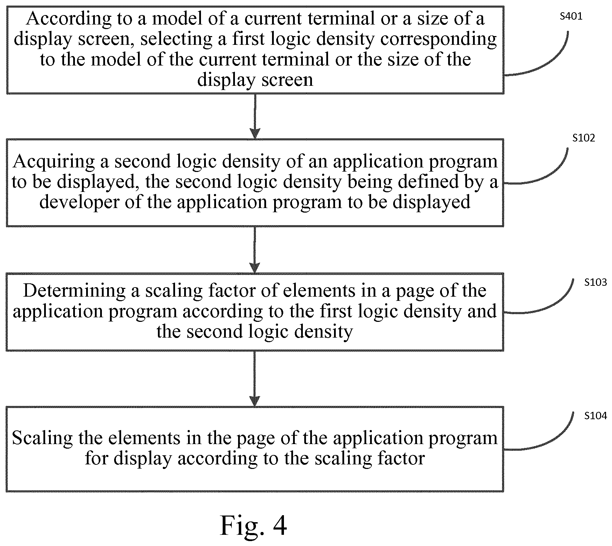

Based on the above method, as shown in Fig. 4, the step S101 can be performed as the following step S401.

In step S401, according to a model of a current terminal or a size of a display screen, a first logic density corresponding to the model of the current terminal or the size of the display screen is selected.

In step S102, a second logic density of an application program to be displayed is acquired, the second logic density being defined by a developer of the application program to be displayed.

In an embodiment, the second logic density may be also called a resource density. The second logic density can be set when a user develops an application program. For example, the second logic density can be 480dpi.

In step S103, a scaling factor of elements in pages of the application program is determined according to the first logic density and the second logic density.

In an embodiment, the step S103 can be performed as the following step A1.

In step A1, the scaling factor m of the elements in the page of the application program is calculated based on the following formula (1):

$$m = \frac{X}{Z} \qquad (1)$$

wherein, m denotes the scaling factor of the elements in the page of the application program; X denotes the first logic density; and Z denotes the second logic density.

For example, in a device with a screen size of 5.5 inches, the first logic density is 480dpi, the second logic density is 400dpi. Then, the scaling factor m of the elements in the page of the application program is m=480dpi/400dpi=1.2 times.

In step S104, the elements in the page of the application program are scaled for display according to the scaling factor.

For example, the scaling factor calculated in the step S103 is 1.2, then the elements in the page will be enlarged by 1.2 times.

It can be seen from the above that, in the embodiments of the present disclosure, at least two methods (such as step S201 and step S401) for selecting a logic density are provided. By modifying the logic density selection mechanism of the native system, the embodiments of the present disclosure can achieve various effects.

For example:

In the method for selecting a logic density as described in step S201, a corresponding logic density can be set for each size of a page layout. Then when he wants to change the size of the page layout, the user can easily adjust the size of the page layout by changing the first logic density.

In the method for selecting a logic density as described in step S401, a first logic density can be set according to a model of a terminal or a size of a screen, instead of using the default logic density in the native system. This brings about an advantage in that, the logic density can correspond to the model of the terminal or the size of the screen, instead of only corresponding to the resolution of the screen. By selecting a logic density according to a model of a terminal or a size of a screen, an optimal logic density corresponding to the model or the size of the screen can be acquired. Thus, it realizes that sizes of elements in the displayed pages on different terminals will be the same, which is best for the visual feeling of the user. Moreover, a large screen can display more contents, rather than just displaying an enlarged page than that on a terminal having a screen of a smaller size but with the same resolution.

In an implementation of the present disclosure, the scaling is only directed to elements, mainly elements displayed in accordance with a logic density, in a displayed page of an application program, rather than the whole displayed resources in the application program, therefore, the reasonable layout of the displayed page will not be affected in the scaling.

In the above methods provided by the embodiments of the present disclosure, a first logic density corresponding to the user demand on page display, and a second logic density of an application program to be displayed are acquired, and a scaling factor of elements in a page of the application program is determined according to the first logic density and the second logic density, so as to scale the elements in the page of the application program for display according to the scaling factor. Thereby, the page display can be adjusted according to the user demand, and the user demand on different manners of page display can be satisfied.

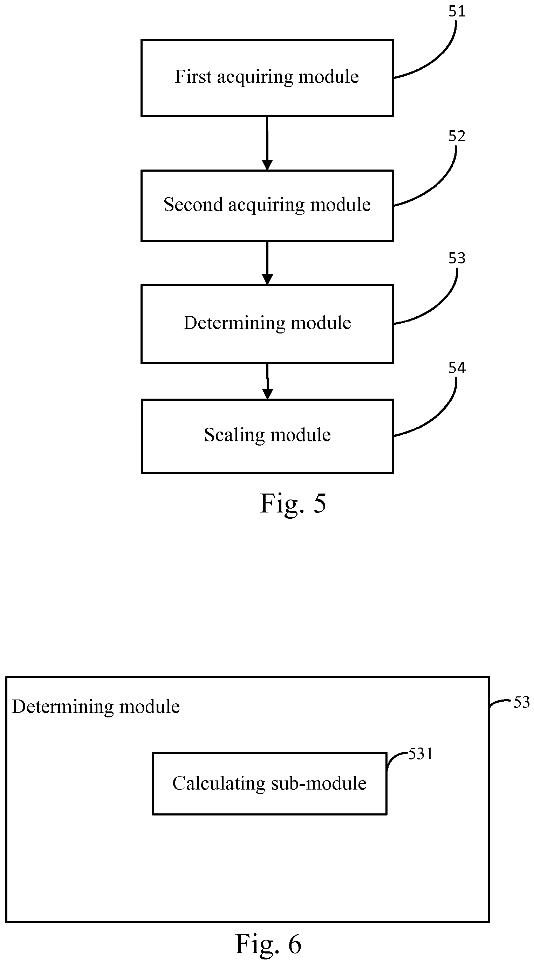

Fig. 5 is a block diagram of a device for adjusting page display according to an exemplary embodiment. As shown in Fig. 5, the device for adjusting page display includes:

a first acquiring module 51 configured to, according to a user demand on page display, acquire a first logic density corresponding to the user demand on page display, the first logic density being defined in an operating system by a developer;
a second acquiring module 52 configured to acquire a second logic density of an application program to be displayed, the second logic density being defined by a developer of the application program to be displayed;
a determining module 53 configured to determine a scaling factor of elements in a page of the application program according to the first logic density and the second logic density; and
a scaling module configured to scale the elements in the page of the application program for display according to the scaling factor.

In an embodiment, as shown in Fig. 6, the determining module 53 may include:
a calculating sub-module 531 configured to calculate the scaling factor m of the elements in the page of the application program based on the following formula

$$m = \frac{X}{Z}$$

wherein, m denotes the scaling factor of the elements in the page of the application program; X denotes the first logic density; and Z denotes the second logic density.

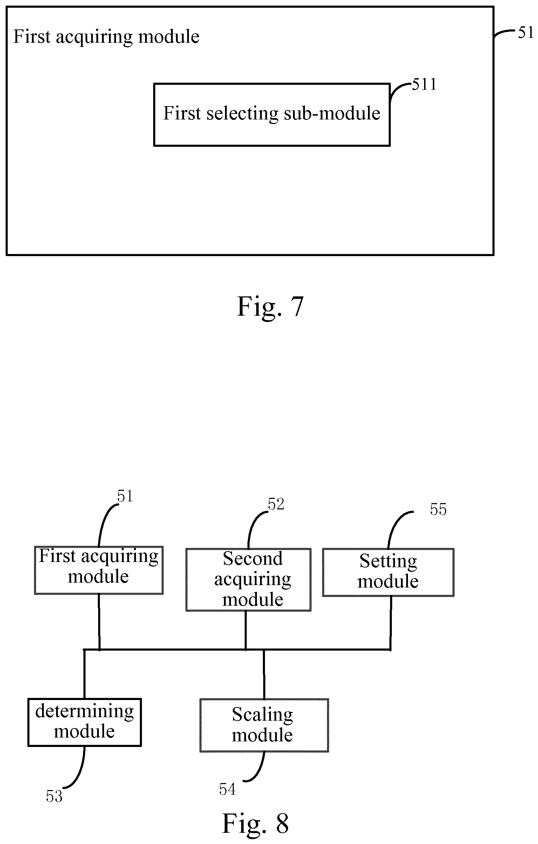

In an embodiment, as shown in Fig. 7, the first acquiring module 51 may include:
a first selecting sub-module 511 configured to, according to a setting about a size of a page layout from a user, select a first logic density corresponding to the size of the page layout set by the user.

In an embodiment, as shown in Fig. 8, the device may further include:

a setting module 55 configured to set at least two page-layout options, each of the page-layout options containing a representation indicating a size of a page layout corresponding to the page-layout option; and set and store a first logic density corresponding to each of the at least two page-layout options; and the first selecting sub-module 511 is further configured to: display the at least two page-layout options; determine a page-layout option of the at least two page-layout options which is selected by the user; and take a first logic density corresponding to the page-layout option selected by the user as the first logic density corresponding to the size of the page layout set by the user.

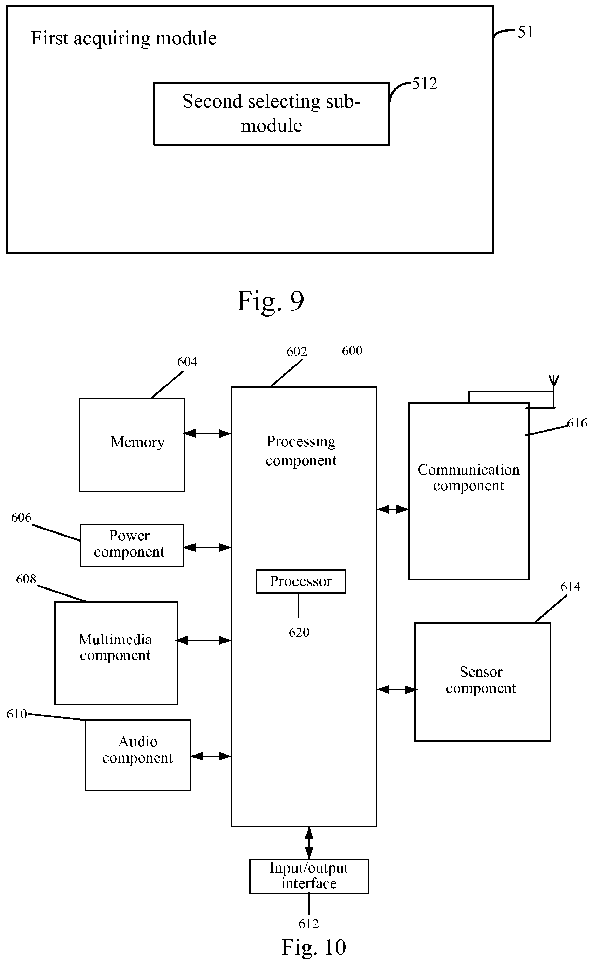

In an embodiment, as shown in Fig. 9, the first acquiring module 51 may include:
a second selecting sub-module 512 configured to, according to a model of a current terminal or a size of a display screen, select a first logic density corresponding to the model of the current terminal or the size of the display screen.

In the above devices provided by the embodiments of the present disclosure, a first logic density corresponding to the user demand on page display, and a second logic density of an application program to be displayed are acquired, and a scaling factor of elements in a page of the application program is determined according to the first logic density and the second logic density, so as to scale the elements in the page of the application program for display according to the scaling factor. Thereby, the page display can be adjusted according to the user demand, and the user demand on different manners of page display can be satisfied.

Fig. 10 is a block diagram of a device 600 for adjusting page display according to an exemplary embodiment, which is applied in a terminal device. For example, the device 600 may be a mobile phone, a computer, a digital broadcast terminal, a messaging device, a gaming console, a tablet, a medical device, exercise equipment, a personal digital assistant, and the like.

Referring to Fig. 10, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

**Claims**

1. A computer implemented method for adjusting page display on an electronic device, the method comprising:

   according to a user demand relating to page display, acquiring (S101) a first logic density corresponding to the user demand relating to page display, the first logic density being defined in an operating system of the electronic device; acquiring (S102) a second logic density of an application program to be displayed, the second logic density being defined in relation to the application program to be displayed; determining (S103) a scaling factor of elements in a page of the application program according to the first logic density and the second logic density; and scaling (S104) the elements in the page of the application program for display according to the scaling factor; wherein according to a user demand relating to page display, acquiring a first logic density corresponding to the user demand on page display, comprises: according to a model of a current terminal or a physical size of a display screen, selecting (S401) a first logic density corresponding to the model of the current terminal or the physical size of its display screen instead of using the native default logic density such that the physical sizes of elements on displayed pages are the same for different physical screen sizes.

2. The method according to claim 1, wherein determining a scaling factor of elements in a page of the application program according to the first logic density and the second logic density comprises: calculating the scaling factor m of the elements in the page of the application program based on the following formula

$$m = \frac{X}{Z}$$

   wherein, m denotes the scaling factor of the elements in the page of the application program; X denotes the first logic density; and Z denotes the second logic density.

3. An electronic device for adjusting page display, the device comprising:

   a first acquiring module (51) configured to, according to a user demand relating to page display, acquire a first logic density corresponding to the user demand relating to page display, the first logic density being defined in an operating system of the electronic device; a second acquiring module (52) configured to acquire a second logic density of an application program to be displayed, the second logic density being defined in relation to the application program to be displayed; a determining module (53) configured to determine a scaling factor of elements in a page of the application program according to the first logic density and the second logic density; and a scaling module (54) configured to scale the elements in the page of the application program for display according to the scaling factor; wherein the first acquiring module comprises: a selecting sub-module (512) configured to, according to a model of a current terminal or a physical size of a display screen, select a first logic density corresponding to the model of the current terminal or the physical size of its display screen instead of using the native default logic density such that the physical sizes of elements on displayed pages are the same for different physical screen sizes.

4. The device according to claim 3, wherein the determining module comprises: a calculating sub-module (531) configured to calculate the scaling factor m of the elements in the page of the application program based on the following formula

$$m = \frac{X}{Z}$$

   wherein, m denotes the scaling factor of the elements in the page of the application program; X denotes the first logic density; and Z denotes the second logic density.

5. A device for adjusting page display, **characterized in that**, the device comprises:

   a processor (620); and a memory (604) for storing instructions executable by the processor; wherein the processor is configured to perform the method of any of claims 1 to 2.

6. A computer program, which when being executed on a processor, causes it to perform the method according to any one of claims 1 or 2.

7. A computer program product stored on a computer usable medium, comprising computer-readable program means for causing a server to implement the method according to any one of claims 1 or 2.

8. A computer program product stored on a computer usable medium, comprising computer-readable program means for causing a server to implement the method of:

according to a user demand relating to page display, acquiring (S101) a first logic density corresponding to the user demand relating to page display, the first logic density being defined in an operating system of an electronic device;
acquiring (S102) a second logic density of an application program to be displayed, the second logic density being defined in relation to the application program to be displayed;
determining (S103) a scaling factor of elements in a page of the application program according to the first logic density and the second logic density; and
sending the scaling factor to the electronic device to scale the elements in the page of the application program for display according to the scaling factor;
wherein the first logic density is acquired by selecting a logic density corresponding to the model of electronic device or the physical size of its display screen instead of its default native logic density such that the physical sizes of elements on displayed pages are the same for different, physical screen sizes.

**Patentansprüche**

1. Computerimplementiertes Verfahren zum Einstellen der Seitenanzeige auf einer elektronischen Vorrichtung, wobei das Verfahren Folgendes aufweist:

gemäß einer Benutzeranforderung in Bezug auf die Seitenanzeige Erfassen (S101) einer ersten Logikdichte, die der Benutzeranforderung in Bezug auf die Seitenanzeige entspricht, wobei die erste Logikdichte in einem Betriebssystem der elektronischen Vorrichtung definiert wird;
Erfassen (S102) einer zweiten Logikdichte eines anzuzeigenden Anwendungsprogramms, wobei die zweite Logikdichte in Bezug auf das anzuzeigende Anwendungsprogramm definiert wird;
Bestimmen (S103) eines Skalierungsfaktors von Elementen in einer Seite des Anwendungsprogramms gemäß der ersten Logikdichte und der zweiten Logikdichte; und
Skalieren (S104) der Elemente in der Seite des Anwendungsprogramms zur Anzeige gemäß dem Skalierungsfaktor;
wobei gemäß einer Benutzeranforderung in Bezug auf die Seitenanzeige das Erfassen einer ersten Logikdichte, die einer Benutzeranforderung zur Seitenanzeige entspricht, Folgendes aufweist:
gemäß einem Modell eines aktuellen Endgeräts oder einer physischen Größe eines Anzeigebildschirms Auswählen (S401) einer ersten Logikdichte, die dem Modell des aktuellen Endgeräts oder der physischen Größe seines Anzeigebildschirms entspricht, anstatt die systemeigene Standard-Logikdichte zu verwenden, so dass die physischen Größen von Elementen auf angezeigten Seiten für verschiedene physische Bildschirmgrößen die gleichen sind.

2. Verfahren nach Anspruch 1, wobei das Bestimmen eines Skalierungsfaktors von Elementen in einer Seite des Anwendungsprogramms gemäß der ersten Logikdichte und der zweiten Logikdichte Folgendes aufweist:
Berechnen des Skalierungsfaktors m der Elemente in der Seite des Anwendungsprogramms auf Basis der folgenden Formel:

$$m = \frac{X}{Z}$$

wobei m den Skalierungsfaktor der Elemente in der Seite des Anwendungsprogramms bezeichnet, X die erste Logikdichte bezeichnet und Z die zweite Logikdichte bezeichnet.

3. Elektronische Vorrichtung zum Einstellen der Seitenanzeige, wobei die Vorrichtung Folgendes aufweist:

ein erstes Erfassungsmodul (51), das konfiguriert ist zum, gemäß einer Benutzeranforderung in Bezug auf die Seitenanzeige, Erfassen einer ersten Logikdichte, die der Benutzeranforderung in Bezug auf die Seitenanzeige entspricht, wobei die erste Logikdichte in einem Betriebssystem der elektronischen Vorrichtung definiert wird;
ein zweites Erfassungsmodul (52), das konfiguriert ist zum Erfassen einer zweiten Logikdichte eines anzuzeigenden Anwendungsprogramms, wobei die zweite Logikdichte in Bezug auf das anzuzeigende Anwendungsprogramm definiert wird;
ein Bestimmungsmodul (53), das konfiguriert ist zum Bestimmen eines Skalierungsfaktors von Elementen in einer Seite des Anwendungsprogramms gemäß der ersten Logikdichte und der zweiten Logikdichte; und
ein Skaliermodul (54), das konfiguriert ist zum Skalieren der Elemente in der Seite des Anwendungsprogramms zur Anzeige gemäß dem Skalierungsfaktor;

wobei das erste Erfassungsmodul Folgendes aufweist:

ein Auswahl-Teilmodul (512), das konfiguriert ist zum, gemäß einem Modell eines aktuellen Endgeräts oder einer physischen Größe eines Anzeigebildschirms, Auswählen einer ersten Logikdichte, die dem Modell des aktuellen Endgeräts oder der physischen Größe seines Anzeigebildschirms entspricht, anstatt die systemeigene Standard-Logikdichte zu verwenden, so dass die physischen Größen von Elementen auf angezeigten Seiten für verschiedene physische Bildschirmgrößen die gleichen sind.

4. Vorrichtung nach Anspruch 3, wobei das Bestimmungsmodul Folgendes aufweist:

ein Berechnungs-Teilmodul (531), das konfiguriert ist zum Berechnen des Skalierungsfaktors m der Elemente in der Seite des Anwendungsprogramms auf Basis der folgenden Formel:

$$m = \frac{X}{Z}$$

wobei m den Skalierungsfaktor der Elemente in der Seite des Anwendungsprogramms bezeichnet, X die erste Logikdichte bezeichnet und Z die zweite Logikdichte bezeichnet.

5. Vorrichtung zum Einstellen der Seitenanzeige, **dadurch gekennzeichnet, dass** die Vorrichtung Folgendes aufweist:

einen Prozessor (620); und
einen Speicher (604) zum Speichern von durch den Prozessor ausführbaren Anweisungen;
wobei der Prozessor zum Durchführen des Verfahrens nach einem der Ansprüche 1 bis 2 konfiguriert ist.

6. Computerprogramm, das bei Ausführung in einem Prozessor das Durchführen des Verfahrens nach einem der Ansprüche 1 oder 2 veranlasst.

7. Computerprogrammprodukt, auf einem computerverwendbaren Datenträger gespeichert, das ein computerlesbares Programmmittel zum Veranlassen eines Servers zum Implementieren des Verfahrens nach einem der Ansprüche 1 oder 2 aufweist.

8. Computerprogrammprodukt, auf einem computerverwendbaren Datenträger gespeichert, das ein computerlesbares Programmmittel zum Veranlassen eines Servers zum Implementieren des folgenden Verfahrens aufweist:

gemäß einer Benutzeranforderung in Bezug auf die Seitenanzeige Erfassen (S101) einer ersten Logikdichte, die der Benutzeranforderung in Bezug auf die Seitenanzeige entspricht, wobei die erste Logikdichte in einem Betriebssystem einer elektronischen Vorrichtung definiert wird;
Erfassen (S102) einer zweiten Logikdichte eines anzuzeigenden Anwendungsprogramms, wobei die zweite Logikdichte in Bezug auf das anzuzeigende Anwendungsprogramm definiert wird;
Bestimmen (S103) eines Skalierungsfaktors von Elementen in einer Seite des Anwendungsprogramms gemäß der ersten Logikdichte und der zweiten Logikdichte; und
Senden des Skalierungsfaktors an die elektronische Vorrichtung zum Skalieren der Elemente in der Seite des Anwendungsprogramms zur Anzeige gemäß dem Skalierungsfaktor;
wobei die erste Logikdichte durch Auswählen einer Logikdichte erfasst wird, die dem Modell der elektronischen Vorrichtung oder der physischen Größe ihres Anzeigebildschirms anstatt ihrer systemeigenen Standard-Logikdichte entspricht, so dass die physischen Größen von Elementen auf angezeigten Seiten für verschiedene physische Bildschirmgrößen die gleichen sind.

**Revendications**

1. Procédé mis en œuvre par ordinateur pour ajuster une page écran sur un dispositif électronique, le procédé comprenant :

conformément à une requête utilisateur concernant une page écran, acquérir (S 101) une première densité logique correspondant à la requête utilisateur concernant une page écran, la première densité logique étant définie dans un système d'exploitation du dispositif électronique ;
acquérir (S 102) une deuxième densité logique d'un programme d'application à afficher, la deuxième densité logique étant définie relativement au programme d'application à afficher ;
déterminer (S103) un facteur d'échelle d'éléments dans une page du programme d'application conformément à la première densité logique et à la deuxième densité logique ; et
mettre à l'échelle (S104) les éléments dans la page du programme d'application pour affichage conformément au facteur d'échelle ;
dans lequel conformément à une requête utilisateur concernant une page écran, acquérir une première densité logique correspondant à la requête utilisateur sur la page écran, comprend :
conformément à un modèle d'un terminal courant ou à une taille physique d'un écran d'affichage, sélectionner (S401) une première densité logique correspondant au modèle du terminal courant ou à la taille physique de son écran d'affichage au lieu d'utiliser la densité logique par défaut native de telle sorte que les tailles physiques d'éléments sur les pages affichées sont les mêmes pour différentes tailles physiques d'écrans.

2. Procédé selon la revendication 1, dans lequel déterminer un facteur d'échelle d'éléments dans une page du programme d'application conformément à la première densité logique et à la deuxième densité logique, comprend :
   calculer le facteur d'échelle m des éléments dans la page du programme d'application sur la base de la formule suivante

$$m = \frac{X}{Z}$$

où, m dénote le facteur d'échelle des éléments dans la page du programme d'application ; X dénote la première densité logique ; et Z dénote la deuxième densité logique.

3. Dispositif électronique pour ajuster une page écran, le dispositif comprenant :

   un premier module d'acquisition (51) configuré pour, conformément à une requête utilisateur concernant une page écran, acquérir une première densité logique correspondant à la requête utilisateur concernant une page écran, la première densité logique étant définie dans un système d'exploitation du dispositif électronique ;
   un deuxième module d'acquisition (52) configuré pour acquérir une deuxième densité logique d'un programme d'application à afficher, la deuxième densité logique étant définie relativement au programme d'application à afficher ;
   un module de détermination (53) configuré pour déterminer un facteur d'échelle d'éléments dans une page du programme d'application conformément à la première densité logique et à la deuxième densité logique ; et
   un module de mise à l'échelle (54) configuré pour mettre à l'échelle les éléments dans la page du programme d'application à afficher conformément au facteur d'échelle ; dans lequel le premier module d'acquisition comprend :
   un sous-module de sélection (512) configuré pour, conformément à un modèle d'un terminal courant ou à une taille physique d'un écran d'affichage, sélectionner une première densité logique correspondant au modèle du terminal courant ou à la taille physique de son écran d'affichage au lieu d'utiliser la densité logique par défaut native de telle sorte que les tailles physiques des éléments sur les pages affichées sont les mêmes pour différentes tailles physiques d'écrans.

4. Dispositif selon la revendication 3, dans lequel le module de détermination comprend :
   un sous-module de calcul (531) configuré pour calculer le facteur d'échelle m des éléments dans la page du programme d'application sur la base de la formule suivante

$$m = \frac{X}{Z}$$

où, m dénote le facteur d'échelle des éléments dans la page du programme d'application ; X dénote la première densité logique ; et Z dénote la deuxième densité logique.

5. Dispositif pour ajuster une page écran, **caractérisé en ce que** le dispositif comprend :

   un processeur (620) ; et
   une mémoire (604) pour stocker des instructions exécutables par le processeur ;
   dans lequel le processeur est configuré pour mettre en œuvre le procédé selon l'une quelconque des revendications 1 à 2.

6. Programme informatique, qui, lorsque exécuté sur un processeur, fait qu'il mette en œuvre le procédé selon l'une quelconque des revendications 1 ou 2.

7. Produit de programme informatique stocké sur un support utilisable par ordinateur, comprenant un moyen de programme lisible par ordinateur pour faire qu'un serveur mette en œuvre le procédé selon l'une quelconque des revendications 1 ou 2.

8. Produit de programme informatique stocké sur un support lisible par ordinateur, comprenant un moyen de programme lisible par ordinateur pour faire qu'un serveur mette en œuvre le procédé consistant à :

   conformément à une requête utilisateur concernant une page écran, acquérir (S101) une première densité logique correspondant à la requête utilisateur concernant une page écran, la première densité logique étant définie dans un système d'exploitation d'un dispositif électronique ;
   acquérir (S 102) une deuxième densité logique d'un programme d'application à afficher, la deuxième densité logique étant définie relativement au programme d'application à afficher ;
   déterminer (S103) un facteur d'échelle d'éléments dans une page du programme d'application conformément à la première densité logique et à la deuxième densité logique ; et
envoyer le facteur d'échelle au dispositif électronique pour mettre à l'échelle les éléments dans la page du programme d'application pour affichage conformément au facteur d'échelle ; dans lequel la première densité logique est acquise en sélectionnant une densité logique correspondant au modèle du dispositif électronique ou à la taille physique de son écran d'affichage au lieu de sa densité logique native par défaut de telle sorte que les tailles physiques des éléments sur les pages affichées sont les mêmes pour différentes tailles physiques d'écrans.

According to a user demand on page display, acquiring a first logic density corresponding to the user demand on page display, the first logic density being defined in an operating system by a developer

S101

Acquiring a second logic density of an application program to be displayed, the second logic density being defined by a developer of the application program to be displayed

S102

Determining a scaling factor of elements in a page of the application program according to the first logic density and the second logic density

S103

Scaling the elements in the page of the application program for display according to the scaling factor

S104

Fig. 1

According to a setting about a size of a page layout from a user, selecting a first logic density corresponding to the size of the page layout set by the user

S201

Acquiring a second logic density of an application program to be displayed, the second logic density being defined by a developer of the application program to be displayed

S102

Determining a scaling factor of elements in a page of the application program according to the first logic density and the second logic density

S103

Scaling the elements in the page of the application program for display according to the scaling factor

S104

Fig. 2

Setting at least two page-layout options, each of the page-layout options containing a representation indicating a size of a page layout corresponding to the page-layout option; and setting and storing a first logic density corresponding to each of the at least two page-layout options — S105

Displaying the at least two page-layout options; determining a page-layout option of the at least two page-layout options which is selected by the user; and taking a first logic density corresponding to the page-layout option selected by the user as the first logic density corresponding to the size of the page layout set by the user — S106

Acquiring a second logic density of an application program to be displayed, the second logic density being defined by a developer of the application program to be displayed — S102

Determining a scaling factor of elements in a page of the application program according to the first logic density and the second logic density — S103

Scaling the elements in the page of the application program for display according to the scaling factor — S104

Fig. 3

According to a model of a current terminal or a size of a display screen, selecting a first logic density corresponding to the model of the current terminal or the size of the display screen

S401

Acquiring a second logic density of an application program to be displayed, the second logic density being defined by a developer of the application program to be displayed

S102

Determining a scaling factor of elements in a page of the application program according to the first logic density and the second logic density

S103

Scaling the elements in the page of the application program for display according to the scaling factor

S104

Fig. 4

51

First acquiring module

52

Second acquiring module

53

Determining module

54

Scaling module

Fig. 5

Determining module

53

Calculating sub-module

531

Fig. 6

First acquiring module ⌐51

First selecting sub-module ⌐511

Fig. 7

51
First acquiring module

52
Second acquiring module

55
Setting module

determining module

Scaling module

53

54

Fig. 8

First acquiring module ⌐51

Second selecting sub-module ⌐512

Fig. 9

604 602 600

Memory ↔ Processing component ↔ Communication component ⌐616

606 Power component ↔

Processor

620

608 Multimedia component ↔

614 Sensor component

610 Audio component ↔

Input/output interface

612

Fig. 10

**EP 3 046 068 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Supporting multiple screens. *Android Developers,* 28 December 2014, https://web.archive.org/web/20141216232021/http://developer-android.com/guide/practices/s creens_support.html